# FASCICULE DE BREVET EUROPEEN

(11) **EP 0 379 446 B1**
(45) Date de publication et mention de la délivrance du brevet: **18.05.1994**
(21) Numéro de dépôt: 90420004.5
(22) Date de dépôt: 03.01.1990
(51) Int. Cl.: H02G 7/12

(54) **Mâchoires de serrage pour organe se fixant sur un conducteur**
Klemmbacken für ein Leiterbefestigungsteil
Clamping jaws for a component to be affixed to a conductor

(30) Priorité: 19.01.1989 FR 8900921
(43) Date de publication de la demande: 25.07.1990
(73) Titulaire: Société Nouvelle des Etablissements Dervaux, S.A., F-42500 Le Chambon Feugerolles (FR)
(72) Inventeur: Novel, Pierre, F-42100 Saint Etienne (FR); Montmartin, Henri, F-42240 Unieux (FR)
(74) Mandataire: Perrier, Jean-Pierre

(56) Documents cités:
- CH-A- 376 975
- US-A- 3 070 651
- US-A- 3 885 086
- US-A- 3 925 595

## Description

Pour fixer un organe quelconque telle qu'une entretoise amortisseuse, une bretelle de dérivation, ou une masse antigiratoire, sur un conducteur électrique non isolé, il est connu d'avoir recours à des mâchoires. Généralement, et comme décrit dans U.S. 3 925 595, comportant deux mâchoires en alliage d'aluminium, l'une des mâchoires, dite mobile ou articulée, est plaquée contre l'autre mâchoire alors dénommée fixe, par au moins une vis transversale. Bien que très utilisé, ce mode de liaison présente certains inconvénients, tant lors du montage sur le conducteur que dans le temps. En effet, le serrage de la ou des vis nécessite des mouvements d'autant plus fastidieux qu'ils sont réalisés à plusieurs mètres au dessus du sol, à partir d'une nacelle ou du pylône portant le conducteur. Dans ces conditions et malgré tout le soin apporté au serrage, il est difficile d'obtenir un couple de serrage précis. De même, après serrage, il est impossible de savoir, du sol; si l'opération de serrage a été correctement réalisée et si le couple de serrage théorique a été respecté. Enfin, dans le temps, il s'avère que l'effort de serrage diminue en valeur et permet le déplacement relatif des mâchoires par rapport au conducteur, ce qui, pour certaines applications, peut se révéler dangereux.

La présente invention a pour but de fournir des mâchoires aisément actionnables, garantissant un serrage régulier en valeur et fiable dans le temps et signalant, au sol, que ce serrage a une valeur voisine de la valeur théorique recherchée.

Dans ces mâchoires, du type composé d'une mâchoire fixe, solidaire d'un corps, d'une mâchoire articulée par rapport à la première, et de moyens de serrage à genouillère, chacune des mâchoires est réalisée en alliage d'aluminium apte à se déformer en épousant le profil du conducteur sous l'action du serrage des mâchoires par la genouillère, ces mâchoires étant caractérisées en ce que chacune des deux mâchoires présente, en section transversale, la forme d'une demi-ellipse dont le grand axe est dans un plan parallèle au plan de fermeture des mâchoires, ces deux mâchoires définissant, au repos et à l'état fermé, une enveloppe dont les dimensions, dans la direction du serrage, est inférieure au diamètre du conducteur devant être serré.

Ainsi, lors de leur serrage sur le conducteur de section circulaire, les mâchoires prennent, en se déformant, une section transversale enveloppant le conducteur, épousant sa forme et augmentant les surfaces de contact avec ce dernier. Cela améliore, d'une part, le contact électrique et, d'autre part, la tenue au glissement de ce conducteur.

Avantageusement, la mâchoire articulée est articulée sur la partie de la mâchoire fixe constituant l'extrémité libre du corps portant cette mâchoire fixe et est solidaire d'au moins une patte, la prolongeant et sécantant le plan contenant ses extrémités, tandis que le dispositif de serrage à genouillère est composé d'un levier de commande, latéral au corps et articulé par l'une de ses extrémités à l'extrémité de la patte précitée, et d'au moins une bielle dont l'une des extrémités est articulée sur le levier précité alors que sur son autre extrémité est aménagé un crochet apte à coopérer avec un axe saillant latéralement du corps.

Avec cet agencement, la mâchoire possède une grande ouverture facilitant sa mise en place sur le conducteur et n'est composée que d'éléments imperdables, ce qui évite les chutes au sol et simplifie le travail du poseur.

D'autres avantages ressortiront de la description qui suit, en référence au dessin schématique annexé, représentant à titre d'exemples non limitatifs, une forme d'exécution de cette mâchoire de serrage dans le cas de son application à une entretoise amortisseuse.

Figures 1 à 4 sont des vues de côté en élévation représentant la mâchoire respectivement en position d'ouverture, en début de fermeture, lors de l'actionnement du levier de fermeture, et en position fermée verrouillée,

Figure 5 est une vue de côté en élévation, avec coupe partielle, montrant, à échelle réduite, une entretoise amortisseuse de vibrations aériennes dont la fixation aux conducteurs est assurée par des mâchoires selon l'invention.

Dans ce dessin, 1 désigne un corps solidaire d'une mâchoire 2 constituant mâchoire fixe et 3 désigne une mâchoire qui est articulée en 4 à l'extrémité libre de la mâchoire fixe 2.

La mâchoire articulée 3 est prolongée, à son extrémité opposée à celle articulée, par une patte 5 qui s'étend au-delà du plan P contenant ses bords. Cette patte, qui est disposée latéralement au corps 1, est munie à son extrémité libre d'un alésage pour un axe d'articulation 6 sur lequel est monté pivotant un levier de commande 7. Entre ses deux extrémités, le levier 7 porte un axe 8 sur lequel est articulée l'une des extrémités d'une bielle 9 dont l'autre extrémité est aménagée en forme de crochet 10. Ce crochet est destiné à coopérer avec un axe 12 saillant latéralement du corps 1.

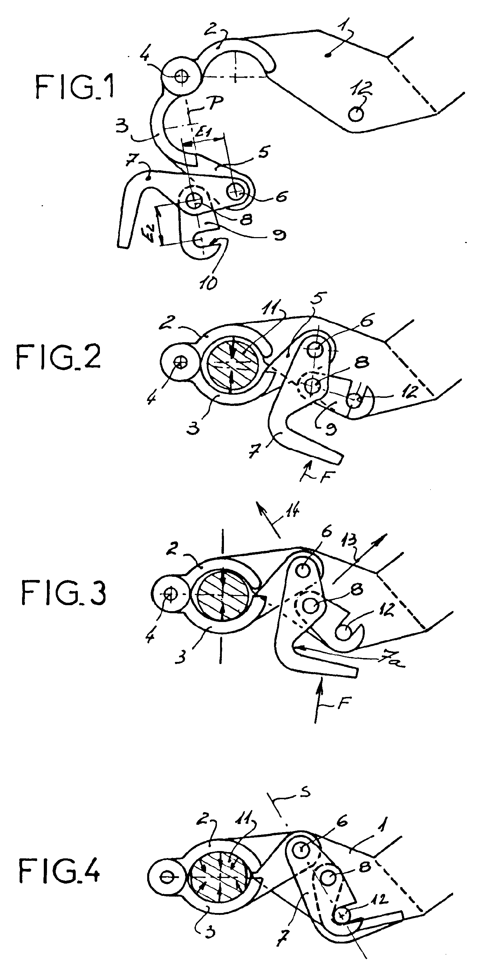

Le corps 1 et la mâchoire 2, de même que la mâchoire 3 et sa patte 5 sont réalisées dans un alliage d'aluminium AS7G traité. Comme le montre la figure 1, lorsque la mâchoire est en position ouverte, elle possède une très grande ouverture facilitant sa mise en place sur le conducteur 11. Cette figure met aussi en évidence que chacune des deux mâchoires 2 et 3 a, en section transversale, la forme d'une demi-ellipse dont le grand axe est disposé dans un plan parallèle au plan P mais aussi parallèle au plan de fermeture.

L'enveloppe, définie par les deux mâchoires à l'état fermé, a au repos avant serrage une dimension transversale, dans la direction du serrage, inférieure au diamètre du conducteur devant être serré.

Dès que la mâchoire est positionnée sur le conducteur, le crochet 10 est amené au voisinage de l'axe 12 de manière à l'enfourcher, comme représenté à la figure 2. Pour terminer le mouvement de fermeture, il suffit d'exercer sur l'extrémité libre du levier 7, extrémité qui est coudée dans cette forme d'exécution, un effort F. Sous l'action de cet effort, l'articulation 8 se déplace dans le sens de la flèche 13 de figure 3, tandis que l'axe d'articulation 6 se déplace dans le sens de la flèche 14, en assurant ainsi le rapprochement des deux mâchoires 2 et 3. Sous l'action du dispositif à genouillère, le serrage s'amplifie jusqu'à obtenir la déformation progressive des mâchoires 2 et 3 qui épousent les contours du conducteur.

Comme montré figure 4, en fin de mouvement, et grâce aux entraxes E1 entre les axes 6 et 8 et E2 entre les axes 8 et 10, l'axe d'articulation 8 passe au-delà du plan S contenant les axes géométriques des axes d'articulation 6 et 12, de manière à assurer l'auto-verrouillage de la liaison ainsi obtenue.

En d'autres termes, à l'état fermé et verrouillé, le dispositif à genouillère ne peut pas s'ouvrir sous les efforts de réaction du conducteur mais uniquement en agissant volontairement sur l'extrémité libre du levier 7.

Il faut noter que la fin de fermeture de la genouillère est matérialisée par contact du creux 7a du levier coudé contre l'axe 12 (figure 4).

Grâce à la déformation des mâchoires, le contact entre celles-ci et le conducteur s'effectue sur la quasi totalité de leur surface interne, ce qui présente l'avantage d'améliorer le contact électrique, mais, aussi et surtout, d'obtenir un excellent contact de frottement s'opposant à tout glissement de la mâchoire par rapport au conducteur 11.

A titre d'exemple, un effort de 20 daN appliqué dans le sens de la flèche F de figure 2 sur le levier de commande 7, permet d'obtenir, sur le conducteur 11 et avec des mâchoires réalisées en alliage AS7G traité, un effort de serrage transversal de 800 daN conduisant à une tenue au glissement de 800 daN.

Lorsque la mâchoire est dans son état fermé verrouillé, la position des leviers constituant son dispositif à genouillère est parfaitement visible du sol et permet ainsi de constater, à tous moments, que la fermeture est correctement réalisée et que l'effort de serrage est proche de celui théorique recherché.

Le dispositif de fermeture à genouillère peut être actionné manuellement ou par des perches. Quels que soient les moyens utilisés, la fermeture s'effectue très aisément et avec beaucoup moins de manipulation que celle exigée par les fermetures à vis.

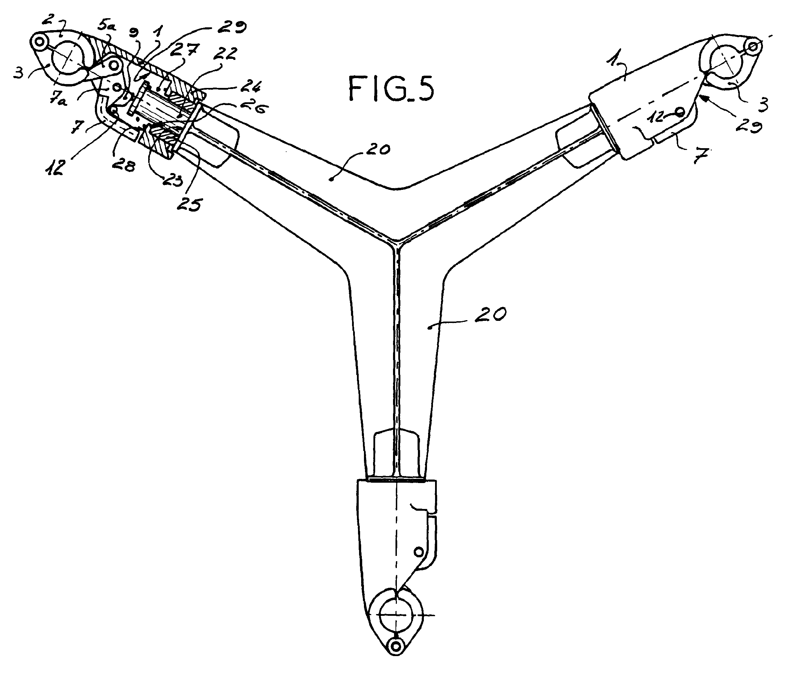

La figure 5 représente une entretoise amortisseuse pour les trois conducteurs d'une phase, comportant des mâchoires selon l'invention. Chacun des bras radiaux 20 de l'entretoise comporte à son extrémité libre un tenon épaulé 22 saillant d'une face épaulée 23. Le corps 1 des mâchoires se prolonge, à l'opposé des mâchoires par un boitier annulaire 24 contenant un anneau en matériau déformable élastiquement 25 et en particulier en élastomère. Cet anneau est emprisonné longitudinalement entre la face 23 et la face 26 du fond du logement du boitier. Radialement, cet anneau est emmanché sur le tenon 22 et dans le logement du boitier. Un ressort 27, interposé entre la tête épaulée du tenon et une face 28 du boitier, positionne élastiquement ce boitier sur le tenon et assure la liaison électrique entre le boitier et le bras 20. Entre les mâchoires et le boitier 24, le corps 1 comporte une cavité 29 dans laquelle se loge le dispositif à genouillère.

Dans cette forme d'exécution, la mâchoire 3 comporte deux pattes 5a espacées entre lesquelles se logent les deux branches d'une chape 7a formée à l'extrémité articulée du levier 7 ; quant à la bielle, elle est disposée entre les deux branches du levier 7.

Il est évident que les mâchoires, selon l'invention, peuvent être montées sur tout organe devant être fixé sur un conducteur électrique, qu il s'agisse d'entretoise à deux ou quatre bras, qu'il s'agisse de bloc de fixation pour bretelle de dérivation ou de masse de compensation se fixant sur le conducteur. Quelle que soit leur application, grâce au système à genouillère et à la déformabilité du matériau les constituant, ces mâchoires assurent une excellente fixation, une très bonne tenue au glissement, à la pose et dans le temps.

## Revendications

1. Mâchoires de serrage pour organe se fixant sur un conducteur du type composé d'une mâchoire fixe (2), solidaire d'un corps (1), d'une mâchoire (3), articulée par rapport à la première, et des moyens de serrage à genouillère chacune des deux mâchoires (2) et (3) étant réalisée dans un alliage d'aluminium apte à se déformer en épousant le profil du conducteur sous l'action du serrage des mâchoires (2-3) par la genouillère, caractérisées en ce que chacune des deux mâchoires présente, en section transversale, la forme d'une demi-ellipse dont le grand axe est dans un plan parallèle au plan de fermeture des mâchoires, ces deux mâchoires définissant, au repos et à l'état fermé, une enveloppe dont les dimensions, dans la direction du serrage, est inférieure au diamètre du conducteur devant être serré.

2. Mâchoires selon la revendication 1, caractérisées en ce que la mâchoire articulée (3) est articulée, sur la partie de la mâchoire fixe (2) constituant l'extrémité libre du corps (1) portant cette mâchoire fixe, et est solidaire d'au moins une patte (5), la prolongeant à l'opposé de son articulation et sécantant le plan (P) contenant ses extrémités, tandis que le dispositif de serrage à genouillère est composé d'un levier de commande (7), latéral au corps (1) et articulé par l'une de ses extrémités et en (6) à l'extrémité de la patte (5) précitée et, d'au moins, une bielle (9) dont l'une des extrémités est articulée en (8) sur le levier (7) précité, alors que son autre extrémité est aménagée en crochet (10) pour coopérer avec un axe (12) saillant latéralement du corps.

3. Mâchoires selon la revendication 2, caractérisées en ce que les entraxes (E1-E2) entre les articulations (6) et (8) du levier, et (8) et (12) de la bielle, sont telles que, lors de la fermeture des mâchoires par le levier (7), l'axe d'articulation (8) passe au-delà du plan (S) contenant les axes d'articulation (6) et (12) pour assurer l'auto-verrouillage de la liaison et le maintien de l'effort sur les mâchoires 2 et (3).

## Patentansprüche

1. Klemme für ein an einem Leiter zu befestigendes Bauteil, welche von einem mit einem Körper (1) verbundenen festen Backen (2), einem relativ zum ersteren angelenkten Backen (3) und von Kniehebel-Klemmitteln gebildet ist, wobei jeder der beiden Backen (2) und (3) aus einer Aluminiumlegierung gefertigt ist und sich unter der Klemmwirkung der Backen (2-3) durch die Kniehebel-Anordnung unter Anpassung an das Leiterprofil verformen kann, **dadurch gekennzeichnet,** daß jeder der beiden Backen im Querschnitt die Form einer Halbellipse aufweist, deren große Achse in einer zur Schließebene der Backen parallelen Ebene liegt, wobei die beiden Backen in Ruhestellung und im Schließzustand eine Hüllfläche festlegen, deren Abmessungen in Klemmrichtung kleiner als der Durchmesser des einzuklemmenden Leiters sind.

2. Klemme nach Anspruch 1, **dadurch gekennzeichnet,** daß der angelenkte Backen (3) an dem Teil des festen Backens (2) angelenkt ist, welcher das freie Ende des diesen festen Backen tragenden Körper (1) bildet, und daß der angelenkte Backen mit wenigstens einem Ansatz (5) verbunden ist, welcher ihn an dem von seinem Gelenk abgewandten Ende verlängert und die seine Enden enthaltende Ebene (P) schneidet, während die Kniehebel-Klemmeinrichtung von einem Betätigungshebel (7), welcher seitlich des Körpers (1) angeordnet und mit einem seiner Enden bei (6) am Ende des Ansatzes (5) angelenkt ist, sowie von wenigstens einem Verbindungselement (9) gebildet ist, dessen eines Ende bei (8) am Hebel (7) angelenkt ist, wahrend sein anderes Ende als Haken (10) zum Zusammenwirken mit einem seitlich vom Körper abstehenden Stift (12) ausgebildet ist.

3. Klemme nach Anspruch 2, **dadurch gekennzeichnet,** daß die Achsabstände (E1-E2) zwischen den Gelenkpunkten (6) und (8) des Hebels sowie (8) und (12) des Verbindungselements derart bemessen sind, daß beim Schileßen der Klemme mittels des Hebels (7) die Gelenkachse (8) über die die Gelenkachsen (6) und (12) enthaltende Ebene (S) hinaustritt, um die Selbstverriegelung der Verbindung und die Aufrechterhaltung der auf die Backen (2) und (3) wirkenden Kraft zu gewährleisten.

## Claims

1. Clamping jaws for a member to be fixed to a conductor of the type comprising a fixed jaw (2) connected to a body (1), a jaw (3) articulated with respect to the first, and toggle clamping means, each of the two jaws (2) and (3) being made of an aluminium alloy adapted to deform so as to shape itself to the profile of the conductor under the clamping action of the jaws (2-3) by means of the toggle, characterised in that each of the two jaws has, in transverse section, a semi-elliptical shape of which the major axis is in a plane parallel to the closure plane of the jaws, these two jaws defining, at rest and in the closed state, an envelope of which the dimensions, in the direction of clamping, are smaller than the diameter of the conductor to be clamped.

2. Jaws according to Claim 1, characterised in that the articulated jaw (3) is articulated on the portion of the fixed jaw (2) constituting the free end of the body (1) carrying this fixed jaw, and is connected to at least one lug (5) extending it away from its articulation and intersecting the plane (P) containing its ends, whilst the toggle clamping device comprises a control lever (7) lateral to the body (1) and articulated by one of its ends and at (6) at the end of the aforementioned lug (5), and at least one link (9) of which one of the ends is articulated at (8) on the aforementioned lever (7), whilst its other end is formed into a hook (10) to cooperate with a pin (12) projecting laterally from the body.

3. Jaws according to Claim 2, characterised in that the distances (E1-E2) between the articulation points (6) and (8) of the lever, and (8) and (12) of the link, are such that, when the jaws are closed by the lever (7), the articulation axis (8) passes beyond the plane (S) containing the articulation axes (6) and (12) in order to ensure the self-locking of the connection and the maintenance of the force on the jaws (2) and (3).
